Europäisches Patentamt

European Patent Office

Office européen des brevets

(11) Numéro de publication : **0 348 250 B1**

(12)                   **FASCICULE DE BREVET EUROPEEN**

(45) Date de publication du fascicule du brevet :
**14.10.92 Bulletin 92/42**

(51) Int. Cl.$^5$ : **G21C 19/30**

(21) Numéro de dépôt : **89401364.8**

(22) Date de dépôt : **17.05.89**

(54) **Dispositif d'ouverture et de fermeture d'un filtre dans une installation nucléaire et procédé de remplacement de la garniture du filtre.**

(30) Priorité : **08.06.88 FR 8807634**

(43) Date de publication de la demande :
**27.12.89 Bulletin 89/52**

(45) Mention de la délivrance du brevet :
**14.10.92 Bulletin 92/42**

(84) Etats contractants désignés :
**BE DE ES GB**

(56) Documents cités :
**FR-A- 2 333 329**
**US-A- 3 890 233**

(56) Documents cités :
**NUCLEAR ENGINEERING, vol. 26, no. 308, janvier 1981, pages 32-35, Sutton, Surrey, GB; R. IVARS et al.: "High temperaturefilter tests show exposure reduction"**

(73) Titulaire : **FRAMATOME**
**Tour Fiat 1, Place de la Coupole**
**F-92400 Courbevoie (FR)**

(72) Inventeur : **Hurdiel, Alain**
**112 rue d'Enghien Bâtiment D2**
**F-95600 - Eaubonne (FR)**

(74) Mandataire : **Bouget, Lucien et al**
**Cabinet Lavoix 2, Place d'Estienne d'Orves**
**F-75441 Paris Cédex 09 (FR)**

Jouve, 18, rue Saint-Denis, 75001 PARIS

# Description

L'invention concerne un dispositif d'ouverture et de fermeture du couvercle d'un filtre dans une installation nucléaire et un procédé de remplacement de la garniture du filtre.

Dans les installations nucléaires telles que les réacteurs nucléaires à eau sous pression, on utilise des filtres pour retenir les impuretés transportées par les fluides en circulation dans certaines parties de l'installation. Ces impuretés peuvent être radio-actives, si bien que les garnitures des filtres retenant ces impuretés se chargent progressivement en produits radio-actifs.

Il est donc nécessaire, dans le cas de certains de ces circuits, de disposer chacun des filtres dans une casemate en béton assurant une protection biologique de la zone entourant le filtre.

Par exemple, dans le cas du circuit de contrôle chimique et volumétrique de l'eau de refroidissement du réacteur (circuit RCV), des filtres sont disposés sur certaines parties du circuit pour retenir des particules radio-actives qui peuvent être transportées par l'eau de refroidissement du réacteur en circulation dans le circuit primaire. Le circuit de contrôle chimique et volumétrique est disposé en dérivation sur le circuit primaire et situé en majeure partie à l'intérieur du bâtiment des auxiliaires nucléaires adjacent au bâtiment du réacteur. Ce circuit permet de prélever une partie de l'eau du circuit primaire pour effectuer la purification de cette eau et l'ajustement des concentrations des additifs chimiques qui sont nécessaires dans le fluide primaire. Le circuit de contrôle chimique et volumétrique comporte donc un ensemble d'installations de purification, des moyens permettant de réaliser des additions de produits chimiques en quantité déterminée ainsi que des échangeurs de chaleur permettant de refroidir ou de réchauffer l'eau après son prélèvement ou avant son retour dans le circuit primaire.

En amont de certains des composants du circuit de contrôle volumétrique et chimique, sont disposés des filtres destinés à recueillir les impuretés radio-actives d'une certaine dimension transportées par le fluide primaire. Ces filtres sont disposés dans des casemates en béton, à l'intérieur du bâtiment des auxiliaires nucléaires.

Pour assurer l'entretien de ces filtres, il est nécessaire de prévoir la possibilité d'effectuer le remplacement de la garniture du filtre lorsque celle-ci est colmatée ou chargée de manière excessive en produits radio-actifs.

Pour celà, le corps du filtre présente une ouverture à sa partie supérieure qui peut être fermée par un couvercle et la casemate comporte, dans sa partie supérieure, une ouverture située à l'aplomb de l'ouverture du corps de filtre et traversant la paroi de béton de la casemate. Cette ouverture de la casemate est normalement fermée par un bouchon qui assure la continuité de la protection biologique. Le bouchon est amovible et comporte des moyens d'accrochage permettant de le soulever ou de le remettre en place dans l'ouverture de la casemate.

L'opération de remplacement de la garniture du filtre nécessite la mise en oeuvre d'une procédure complexe comportant de nombreuses étapes successives.

Il est tout d'abord nécessaire de remplacer le bouchon de fermeture de la casemate par un module de manutention au travers duquel on peut faire pénétrer dans la casemate des outils de dévissage du couvercle. Le module de manutention doit comporter un hublot et des moyens d'éclairage de l'intérieur de la casemate pour permettre une visualisation du couvercle du filtre pendant la mise en place des outils et le dévissage. Le module de manutention est donc un élément relativement complexe si on le compare à un simple bouchon de fermeture.

Après dévissage du couvercle, on effectue l'ouverture de ce couvercle en utilisant également un outil pénétrant dans la casemate par une ouverture du module de manutention.

Le module de manutention est alors enlevé de l'ouverture de la casemate ; on vient placer un château de plomb au-dessus de cette ouverture, on extrait la garniture du corps du filtre en utilisant un moyen de manutention et de levage associé au château de plomb et on recueille cette garniture usagée à l'intérieur du château de plomb. Le château de plomb est ensuite évacué et on vient mettre en place, par l'ouverture de la casemate, une garniture neuve dans le corps du filtre en utilisant un outil de manutention et de levage. Le module de manutention est alors remis en place sur l'ouverture de la casemate et on réalise la fermeture et le vissage du couvercle en utilisant des outils passant à travers le module de manutention.

Le module de manutention est alors démonté et enlevé puis remplacé par le bouchon de fermeture de la casemate.

Il apparait donc que le remplacement de la garniture du filtre nécessite une suite d'opérations complexe et relativement longue et l'utilisation d'outillages et de moyens spécifiques qui doivent être conçus spécialement.

Le but de l'invention est donc de proposer un dispositif d'ouverture et de fermeture d'un filtre d'un circuit de fluide d'une installation nucléaire disposé à l'intérieur d'une casemate de protection biologique ayant une ouverture d'accès au filtre dans sa partie supérieure obturable par un bouchon muni de moyens d'accrochage, le filtre comportant un corps ayant une ouverture à sa partie supérieure obturable par un couvercle et située à l'aplomb de l'ouverture de la casemate, ce dispositif permettant d'assurer l'ouverture et la fermeture du couvercle du filtre et l'accès à sa garniture, de manière simple, sans utiliser des équipements spécifiques tels qu'un module de manutention.

Dans ce but, le dispositif suivant l'invention est constitué par un ensemble comportant :

- le bouchon d'obturation de la casemate qui est prolongé par un corps cylindrique dans sa direction axiale et percé d'une ouverture traversant le bouchon et le corps cylindrique suivant leur axe et suivant toute leur longueur,

- une tige de manoeuvre montée suivant l'axe de l'ouverture traversant le bouchon et le corps cylindrique, en appui sur le bouchon, montée rotative autour de son axe dans l'ouverture du bouchon et comportant une première extrémité saillante par rapport au bouchon constituant une partie d'entraînement en rotation autour de son axe et une seconde extrémité opposée saillante par rapport au corps cylindrique,

- un organe de déplacement axial de la tige dans un sens et dans l'autre sur une longueur limitée,

- le couvercle de fermeture du filtre relié à la seconde extrémité de la tige de manoeuvre,

- et un dispositif de verrouillage du couvercle sur le corps du filtre porté par le couvercle et comportant un organe de manoeuvre constitué par un écrou engagé sur une partie filetée de la seconde extrémité de la tige de manoeuvre.

L'invention est également relative à un procédé de remplacement de la garniture d'un filtre disposé dans une casemate de protection biologique, plus simple et plus rapide que les procédés de l'art antérieur, grâce à l'utilisation d'un dispositif d'ouverture et de fermeture suivant l'invention.

Afin de bien faire comprendre l'invention, on va maintenant décrire, à titre d'exemples non limitatifs, en se référant aux figures jointes en annexe, plusieurs modes de réalisation d'un dispositif d'ouverture et de fermeture suivant l'invention et l'utilisation de ce dispositif, lors d'une opération de remplacement de la garniture du filtre.

La figure 1 est une vue en coupe par un plan vertical d'une casemate de protection biologique renfermant un filtre du circuit de contrôle chimique et volumétrique d'un réacteur nucléaire à eau sous pression, selon l'art antérieur.

La figure 2 est une vue en élévation avec coupe partielle d'un dispositif d'ouverture et de fermeture du couvercle d'un filtre, suivant l'invention.

Les figures 3A et 3B sont des demi-vues en coupe à plus grande échelle d'une partie du dispositif d'ouverture et de fermeture, montrant le dispositif de verrouillage du couvercle dans sa position verrouillée et dans sa position déverrouillée respectivement.

Les figures 4A et 4B sont des demi-vues analogues aux demi-vues 3A et 3B représentant une variante de réalisation du dispositif de verrouillage du couvercle d'un filtre.

Les figures 5A, 5B, 5C, 5D, 5E, 5F, 5G et 5H sont des vues en élévation du dispositif de fermeture et de la partie supérieure du filtre, au cours des différentes étapes successives d'une opération de remplacement de la garniture du filtre.

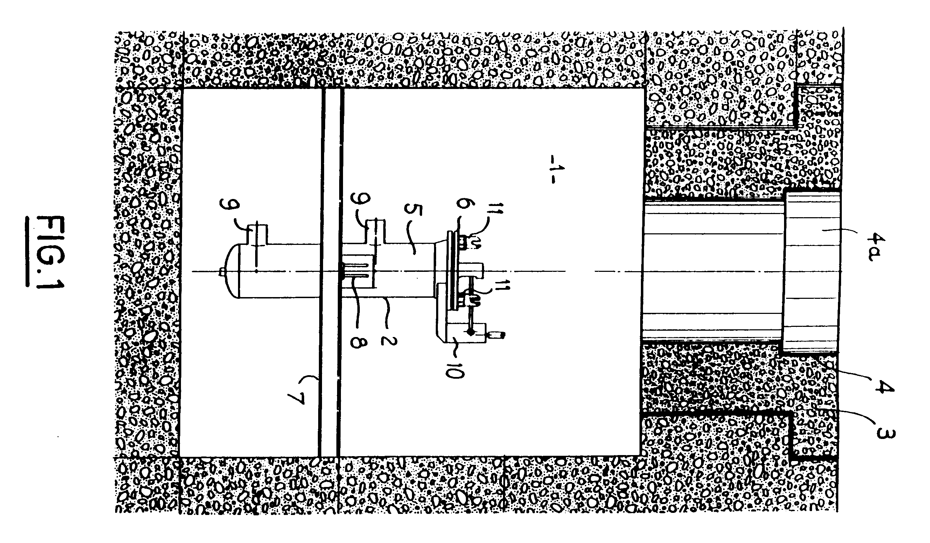

Sur la figure 1, on voit la casemate 1 de protection biologique d'un filtre 2 disposé sur le circuit de contrôle chimique et volumétrique d'un réacteur nucléaire à eau sous pression. La casemate 1 comporte des parois latérales et un fond en béton faisant partie du bâtiment des auxiliaires nucléaires du réacteur ainsi qu'une dalle supérieure 3 de forte épaisseur (de l'ordre d'un mètre) traversée par une ouverture 4 située à l'aplomb du filtre 2 et permettant d'avoir accès à la partie supérieure du filtre.

Pendant le fonctionnement du filtre, l'ouverture 4 est fermée par un dispositif tel qu'un bouchon 4a permettant d'assurer la continuité de la protection biologique de la casemate.

Le filtre 2 comporte un corps 5 fermé à sa partie inférieure par un fond bombé et comportant une ouverture à sa partie supérieure qui est fermée par un couvercle 6 pendant le fonctionnement du filtre. Des pattes 8 de support du filtre sont fixées sur la partie médiane du corps de filtre 5 et reposent sur des poutres de support 7 disposées transversalement dans la cavité de la casemate 1 et fixées dans les parois de cette casemate. Des tubulures d'entrée et de sortie d'eau 9 dans le corps de filtre 5 sont reliées à des tuyauteries du circuit de contrôle chimique et volumétrique non représentées.

Suivant une disposition connue, le couvercle 6 comporte un dispositif d'ouverture et de fermeture 10 ainsi que des vis de verrouillage 11.

La vis de commande du dispositif d'ouverture et de fermeture 10 et les vis de verrouillage 11 sont accessibles depuis le dessus de la casemate 1, en utilisant des outillages spéciaux et en mettant en place un module de manutention dans l'ouverture 4.

Le remplacement de la garniture du filtre 2 selon l'art antérieur représenté sur la figure 1 nécessite la mise en oeuvre des opérations successives qui ont été décrites ci-dessus.

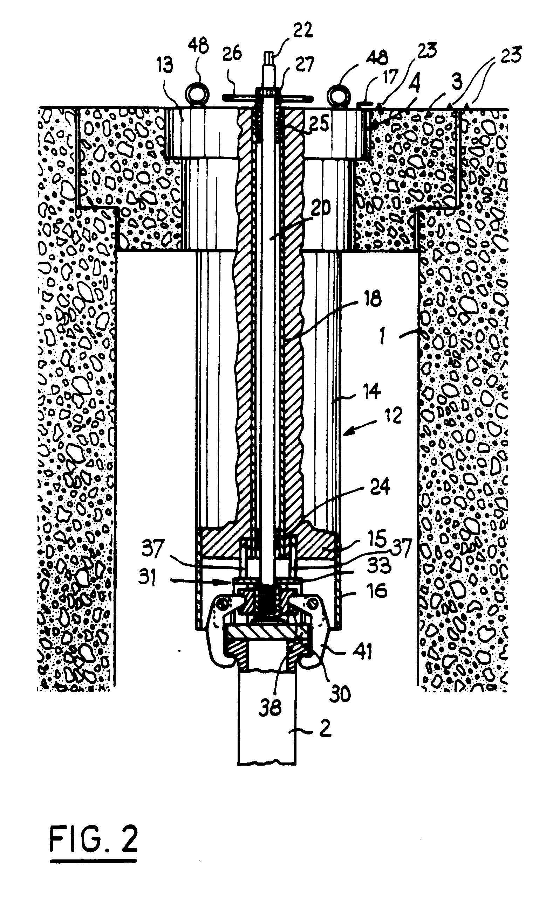

Sur la figure 2, on a représenté un dispositif d'ouverture et de fermeture du couvercle d'un filtre, selon l'invention, qui peut être mis en place sur le corps 5 d'un filtre 2 tel que représenté sur la figure 1, le couvercle 6 et son dispositif d'ouverture et de fermeture 10 ayant été supprimés.

Le dispositif d'ouverture et de fermeture suivant l'invention désigné de manière générale par le repère 12 comporte un bouchon d'obturation 13 dont la forme et les dimensions correspondent à celles de l'ouverture 4 traversant la dalle 3 prolongé dans sa direction axiale par un corps cylindrique 14 dont la longueur correspond sensiblement à la distance verticale séparant la partie inférieure de la dalle 3 de la partie supérieure du corps 5 du filtre 2 en position dans la casemate, comme représenté sur la figure 1.

Le bouchon 13 et le corps cylindrique 14 comportent une masse centrale 15 en un métal lourd qui peut être également de l'acier entourée par une chemise en tôle d'acier 16.

Le bouchon 13 présente des éléments de repérage 17 assurant le positionnement exact en orientation du bouchon 13, autour de l'axe de l'ouverture 4 de la dalle 3. Lors de la mise en place du bouchon 13, les éléments de repérage 17 sont alignés avec des éléments correspondants 23 prévus sur la dalle 3 et la partie supérieure de la casemate 1.

La partie centrale massive du bouchon 13 et du corps 14 est percée sur toute sa longueur pour constituer une ouverture 18 dirigée suivant l'axe du bouchon et du prolongement cylindrique 14. L'ouverture 18 peut être délimitée par une chemise interne constituée par un tube en acier.

Une tige de manoeuvre 20 est disposée suivant la longueur de l'ouverture 18 de façon à présenter des parties d'extrémité saillantes par rapport à cette ouverture à ses deux extrémités. L'extrémité de la tige 20 saillante par rapport au bouchon 13 présente une partie d'entraînement en rotation 22 à section carrée sur laquelle on peut venir engager un dispositif d'entraînement en rotation tel qu'une clé ou une manivelle pour assurer la mise en rotation de la tige 20 autour de son axe.

La tige 20 est montée rotative autour de son axe à l'intérieur de l'ouverture 18 grâce à un palier lisse inférieur 24 et à un manchon supérieur 25 dans l'alésage intérieur duquel la tige 20 est montée à frottement doux. Le manchon 25 est fileté extérieurement et engagé dans une partie taraudée correspondante de l'ouverture 18, à l'intérieur du bouchon 13.

Le manchon 25 est solidaire à sa partie supérieure d'une poignée 26 accessible depuis la surface supérieure du bouchon 13 et permettant de faire tourner le manchon 25 autour de l'axe de l'ouverture 18 pour assurer son vissage ou son dévissage dans la partie filetée de l'ouverture 18. La tige 20 vient en appui sur la partie supérieure du manchon 25 vissé dans le bouchon 13, par l'intermédiaire d'une bague rapportée 27.

La tige 20 est montée à la fois rotative et glissante dans le palier lisse 24 et porte, à son extrémité inférieure saillante par rapport au prolongement cylindrique 14 du bouchon 13, le couvercle 30 du filtre 2.

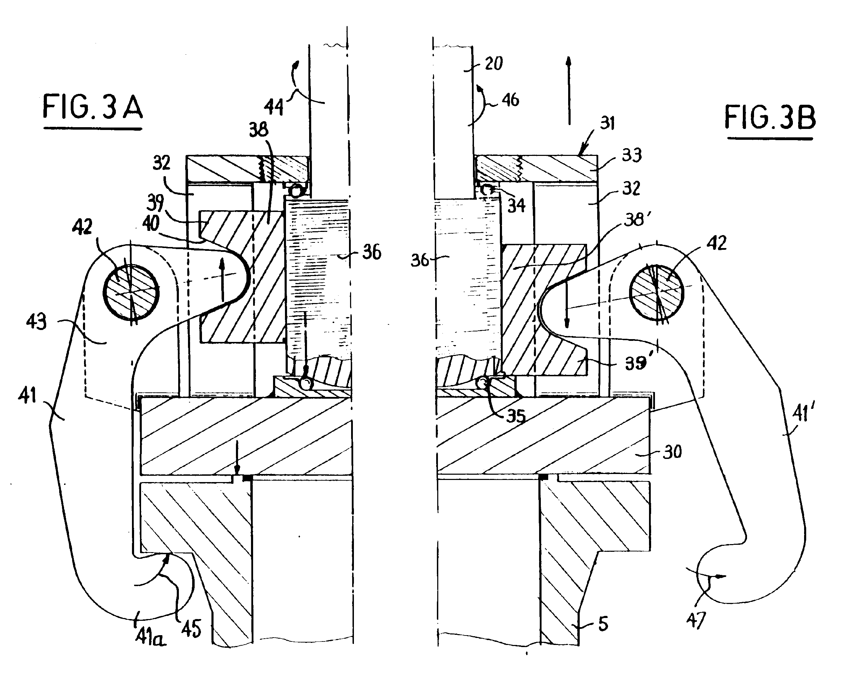

Comme il est visible sur les figures 3A et 3B, la partie inférieure de la tige 20 porte le couvercle 30 par l'intermédiaire d'un ensemble de suspension 31 solidaire de la surface supérieure du couvercle 30. L'ensemble 31 comporte une structure verticale 32 sur la partie supérieure de laquelle est fixée une plaque en deux parties 33. L'extrémité de la tige 20 est montée rotative à l'intérieur de l'ensemble de suspension 31 par l'intermédaire de butées à bille 34 et 35. La butée à bille 35 est montée sur la face supérieure du couvercle 30 et la butée 34 sur la surface inférieure de la plaque 33.

Entre les butées 34 et 35 la partie d'extrémité de la tige 20 filetée sur sa surface extérieure constitue une vis de manoeuvre 36 qui peut être actionnée par mise en rotation de la tige autour de son axe.

La vis 36 est en prise avec un écrou 38 qui comporte des prolongements 39 de direction radiale engagés dans des lumières de la structure verticale 32 de direction verticale. Les prolongements 39 présentent des cavités arrondies 40 dans chacune desquelles est engagée l'extrémité d'une griffe de verrouillage 41 du couvercle 30 du filtre. Les griffes de verrouillage 41 sont montées pivotantes par l'intermédiaire d'axes 42, sur des supports 43 solidaires de la partie supérieure du couvercle 30.

Comme il est visible sur la figure 2, la plaque supérieure 33 de l'ensemble de suspension 31 porte deux chandelles verticales 37 qui sont engagées de manière coulissante dans deux alésages usinés dans la pièce 15. Les chandelles 37 et les alésages correspondants dirigés suivant la direction axiale du bouchon et de la tige 20 réalisent un blocage en rotation de l'ensemble 31 et du couvercle 30 par rapport au bouchon, lors de la rotation de la tige 20 et de la vis 36 à l'intérieur de l'écrou 38.

Sur la figure 3B, on a représenté une griffe de verrouillage 41 dans sa position déverrouillée 41' et sur la figure 3A, on a représenté une griffe de verrouillage 41 dans sa position verrouillée.

Les griffes 41 peuvent passer de leur position de verrouillage du couvercle 41 à leur position de déverrouillage 41', par déplacement de l'écrou et de ses prolongements radiaux de leur position 38, 39 à leur position 38', 39' et inversement. Ce déplacement de l'écrou 38 entre ses positions de verrouillage et de déverrouillage peut être obtenu par mise en rotation de la vis 36 c'est-à-dire de la tige 20 autour de son axe, dans un sens ou dans l'autre.

Dans un sens de rotation (flèche 44), l'écrou 38 se déplace vers le haut et entraîne, par l'intermédiaire de la cavité 40 de son prolongement 39, la griffe 41 en rotation dans le sens de la flèche 45. Cette rotation amène la partie d'accrochage inférieure 41a de la griffe dans sa position d'accrochage sous le rebord de la partie supérieure du corps 5 du filtre.

La rotation de la tige de manoeuvre 20 et de la vis 36 dans l'autre sens (flèche 46) entraîne le déplacement vers le bas de l'écrou 38 et le pivotement des griffes dans le sens de la flèche 47.

L'écrou 38 est bloqué en rotation à l'intérieur des lumières de la structure 32, par l'intermédiaire de ses prolongements 39. De plus, l'ensemble 31 est bloqué en rotation par rapport au bouchon 13 par les chandelles 37.

Le couvercle 30 du filtre suspendu à l'extrémité de la tige de manoeuvre 20 par l'intermédiaire de l'ensemble 31 est donc, dans le dispositif suivant l'invention, une partie intégrante du dispositif d'ouverture et de fermeture du filtre, de même que le bouchon 13. Le dispositif de verrouillage du couvercle est également suspendu à la tige de manoeuvre 20, par l'intermédiaire du couvercle 30.

Il est bien évident qu'on peut utiliser un nombre de griffes 41 quelconque pour assurer le verrouillage du couvercle, ces griffes étant actionnées simultanément par un écrou unique 38. De préférence, on utilisera deux griffes placées à 180° autour du couvercle, trois griffes disposées à 120° ou quatre griffes disposées à 90°, suivant les impératifs de conception du dispositif et la pression régnant à l'intérieur du filtre.

Le bouchon d'obturation 13 de la casemate comporte des oreilles de manutention 48 accessibles depuis la partie supérieure de la casemate.

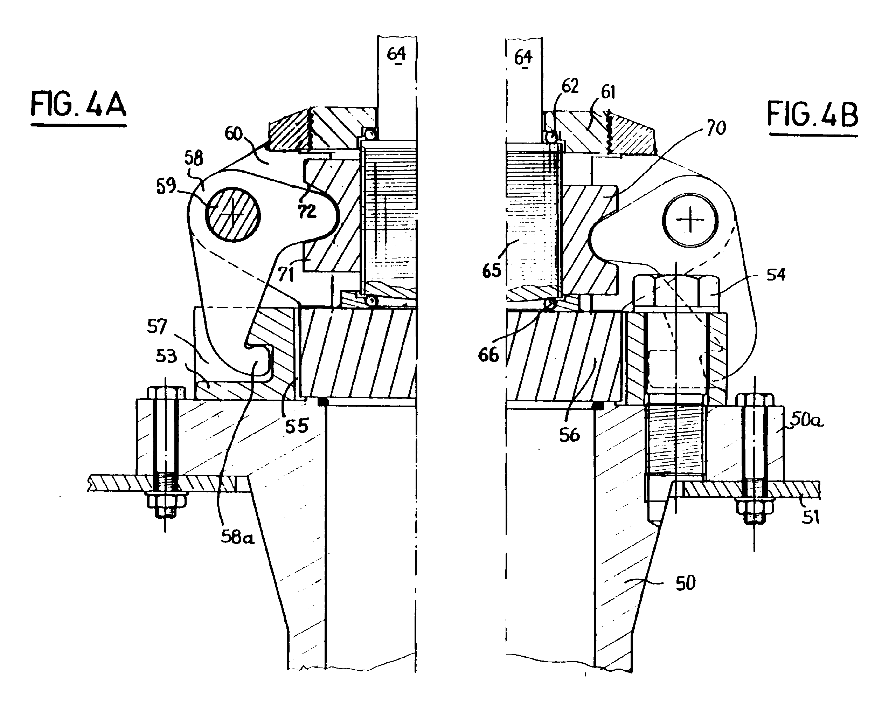

Sur les figures 4A et 4B, on a représenté une variante de réalisation du dispositif de verrouillage du couvercle d'un filtre utilisable dans le cas où le corps de filtre 50 comporte une bride supérieure 50a fixée sur une plaque de support horizontal 51 solidaire de la structure de la casemate. Ce type de montage est utilisé pour certains filtres du circuit de contrôle chimique et volumétrique de réacteurs nucléaires à eau sous pression actuellement en service.

Sur ce type de filtre, il n'est pas possible de réaliser le verrouillage du couvercle par appui des extrémités d'accrochage des griffes sous la bride du corps de filtre.

Le dispositif d'ouverture et de fermeture suivant l'invention peut cependant être facilement adapté à cette structure de filtre en utilisant le mode de réalisation représenté sur les figures 4A et 4B.

Une couronne d'ancrage 53 est fixée par l'intermédiaire de vis 54 sur la bride supérieure 50a du corps de filtre 50. La bride d'ancrage 53 comporte un alésage central 55 à l'intérieur duquel vient se placer le couvercle du filtre 56.

La couronne d'ancrage est de plus usinée sur sa partie extérieure pour constituer des cavités d'accrochage 57.

Le dispositif de verrouillage comporte des griffes 58 montées pivotantes autour d'axes 59 sur des supports de griffe 60 fixés sur la surface supérieure du couvercle 56. Une plaque de suspension 61 est fixée sur la partie supérieure des supports de griffe 60 et comporte sur sa surface inférieure une butée à bille 62 destinée à coopérer avec un élargissement de la tige de manoeuvre 64 dans sa partie d'extrémité inférieure constituant une vis de manoeuvre 65. L'extrémité de la vis de manoeuvre 65 est elle-même en appui sur une butée à bille 66 solidaire de la surface supérieure du couvercle 56. De cette manière, l'extrémité de la tige de manoeuvre 64 assure la suspension du couvercle 56 tout en étant montée rotative autour de son axe, par rapport au couvercle.

Un écrou 70 est engagé sur la vis de manoeuvre 65 constituant la partie inférieure de la tige 64. Cet écrou 70 comporte des prolongements 71 dans la direction radiale dans lesquels sont usinés des cavités arrondies 72.

Les cavités 72 coopèrent avec les parties d'extrémité des doigts pivotants 58 pour assurer le déplacement en pivotement de ces doigts 58 entre une position de verrouillage telle que représentée sur la figure 4A et une position de déverrouillage représentée sur la figure 4B.

Ce verrouillage et ce déverrouillage sont obtenus par déplacement vers le haut et vers le bas respectivement de l'écrou 70 qui est bloqué en rotation et guidé en translation par les supports des doigts pivotants 60. Ces déplacements dans un sens et dans l'autre de l'écrou 70 sont obtenus par rotation de la tige 64 dans un sens et dans l'autre. Le blocage en rotation de l'ensemble de suspension et de verrouillage et du couvercle par rapport au bouchon est obtenu grâce à des chandelles analogues aux chandelles 37 (figure 2) fixées sur la plaque de suspension 61.

Dans leur position de verrouillage, les doigts 58 ont leur extrémité de verrouillage 58a engagée dans les cavités 57 usinées sur la partie externe de la couronne d'ancrage 53 fixée sur la bride supérieure 50a du corps de filtre 50.

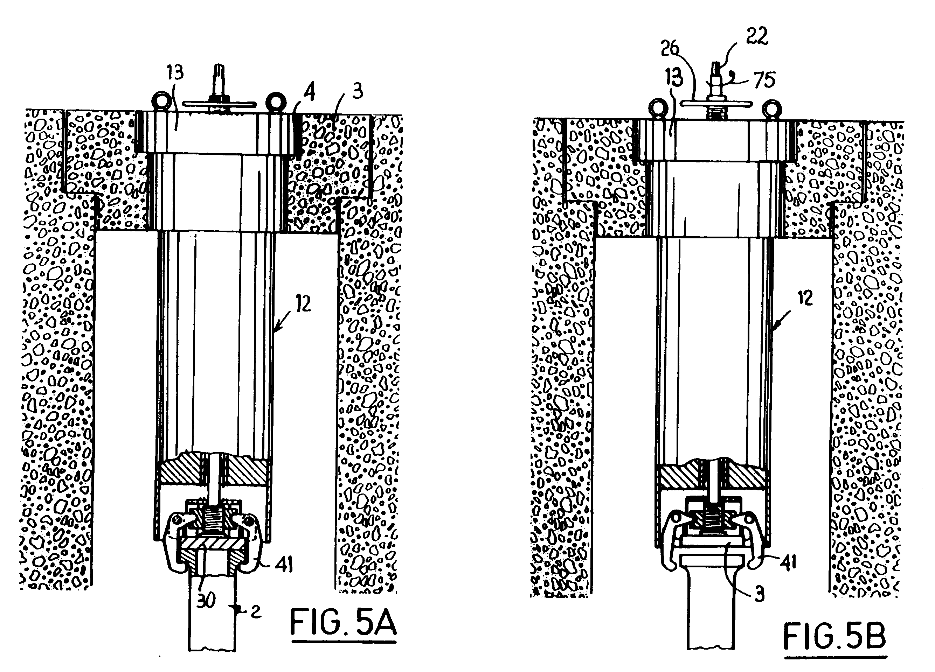

On va maintenant se reporter aux figures 5A à 5H pour décrire le fonctionnement d'un dispositif d'ouverture et de fermeture suivant l'invention et suivant le mode de réalisation représenté sur les figures 2 et 3.

Sur la figure 5A, on a représenté la partie supérieure du filtre et le dispositif de fermeture dans la position qu'ils occupent lorsque le filtre est en service.

Le dispositif de fermeture 12 repose, par l'intermédiaire du bouchon 13, dans l'ouverture 4 de la dalle 3 et le couvercle 30 du filtre 2, fixé à l'extrémité de l'ensemble 12, est en position de fermeture étanche sur la bride supérieure du corps de filtre 5. Les griffes 41 en position de verrouillage assurent le maintien du couvercle dans cette position de fermeture étanche, quelle que soit la pression à l'intérieur du corps de filtre.

Or Lorsque la garniture du filtre 2 doit être remplacée, on effectue le déverrouillage et on réalise un soulèvement limité du couvercle 30, comme représenté sur la figure 5B, après avoir isolé le filtre du circuit (éventuellement sous pression) sur lequel il est interposé.

Pour effectuer le déverrouillage du couvercle 30, on réalise un pivotement des doigts 41 vers l'extérieur en faisant tourner la tige 20 autour de son axe, dans le sens de la flèche 75. Cette rotation est obtenue en utilisant une clé ou une manivelle engagée sur la partie à section carrée 22 de la tige 20 saillante au-dessus du bouchon 13.

A la fin du déverrouillage, l'écrou 38 visible sur la figure 3B est parvenu dans sa position 38' où il est arrêté par la butée 35.

On fait alors tourner le manchon fileté 25 dans le sens du dévissage en utilisant la poignée 26. On réalise ainsi un soulèvement de la tige de manoeuvre 20 en appui sur le manchon 25 par l'intermédiaire de la bague 27. Ce déplacement de la tige 20 s'accompagne d'un glissement de cette tige à l'intérieur du palier lisse 24 et d'un soulèvement limité du couvercle 30 au-dessus de la bride d'extrémité du corps de filtre 5. Ce soulèvement du couvercle 30 de quelques millimètres permet de séparer totalement l'ensemble de fermeture 12 du corps de filtre 5.

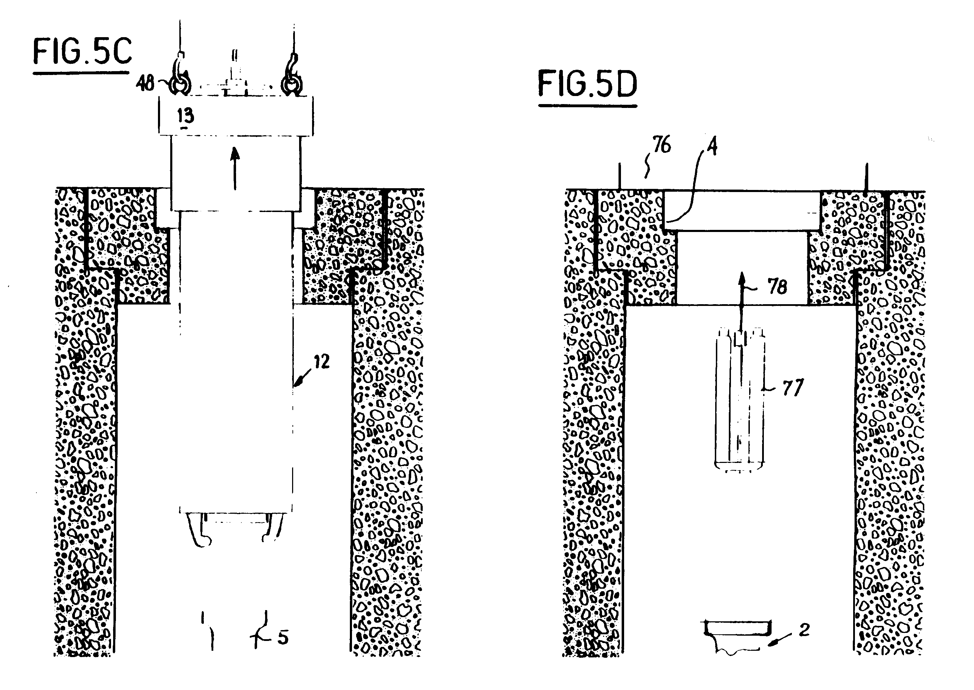

Comme il est visible sur la figure 5C, l'ensemble de fermeture 12 est ensuite soulevé et extrait de la casemate 1 dans son ensemble en utilisant un moyen de levage comportant des élingues et des crochets qui sont introduits dans les oreilles de levage 48 du bouchon 13.

Comme il est visible sur la figure 5D, on dispose ensuite un château de plomb 76 au-dessus de l'ouverture 4 de la dalle 3 situé à l'aplomb de l'ouverture supérieure du corps de filtre 5 qui est alors accessible.

On fait pénétrer dans la partie supérieure du corps de filtre le moyen de préhension d'une machine de levage associé au château de plomb 76 pour réaliser la préhension de la garniture usagée 77 du filtre 2 et son introduction dans le château de plomb 76 par levage dans la direction verticale (flèche 78).

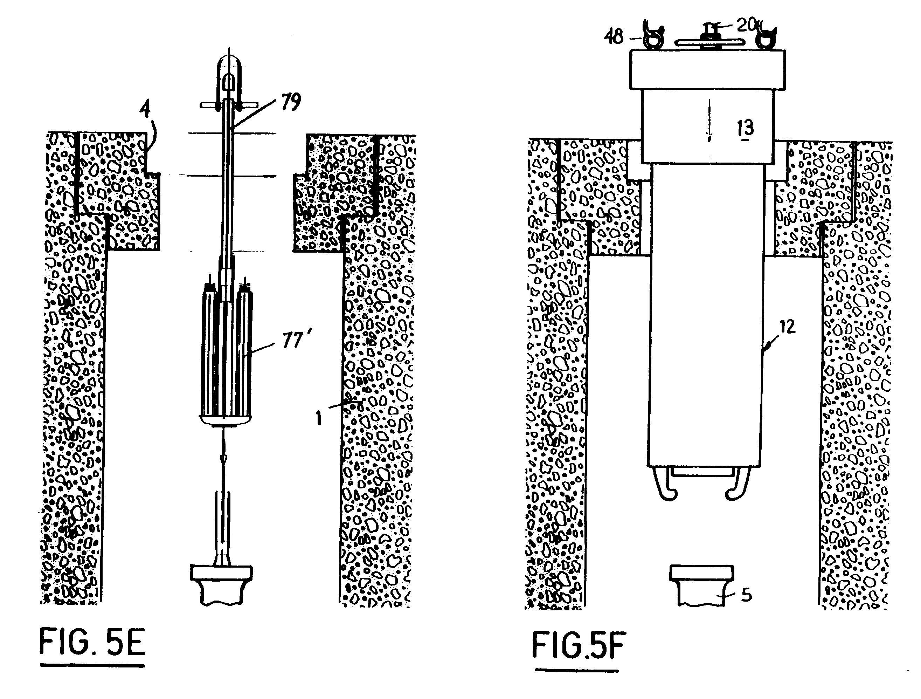

Comme il est visible sur la figure 5E, on introduit ensuite dans le corps de filtre 5 en utilisant un dispositif de levage et de manutention 78, une garniture de filtre neuve 77', l'ouverture 4 de la casemate 1 étant ouverte à l'air libre, après évacuation du château de plomb 76 contenant la garniture usagée et radio-active 77.

Il est à noter que les étapes du procédé de remplacement du filtre représentées sur les figures 5D et 5E et correspondant au remplacement proprement dit de la garniture sont identiques aux étapes correspondantes du procédé suivant l'art antérieur.

Comme il est visible sur la figure 5F, on effectue alors la remise en place de l'élément de fermeture 12 grâce à un dispositif de levage dont les crochets sont fixés aux oreilles de manutention 48 du bouchon 13.

Le dispositif de fermeture 12 descend à la verticale en direction du corps de filtre 5, le bouchon 13 venant reposer sur les épaulements correspondants de l'ouverture 4 de la dalle 3, à la fin du mouvement de descente de l'ensemble 12. Le réglage d'orientation du bouchon 13 à l'intérieur de l'ouverture 4 est assuré grâce aux éléments de repérage 17 et 23. Il est à remarquer que le couvercle est maintenu dans sa position soulevée par rapport au corps cylindrique 14 et au bouchon 13, le manchon fileté 25 étant maintenu en position haute et la tige de manoeuvre 20 à laquelle est suspendu le couvercle 30 étant en appui par l'intermédiaire de la bague 27 sur le manchon 25. Les doigts d'accrochage 41 sont en position écartée vers l'extérieur.

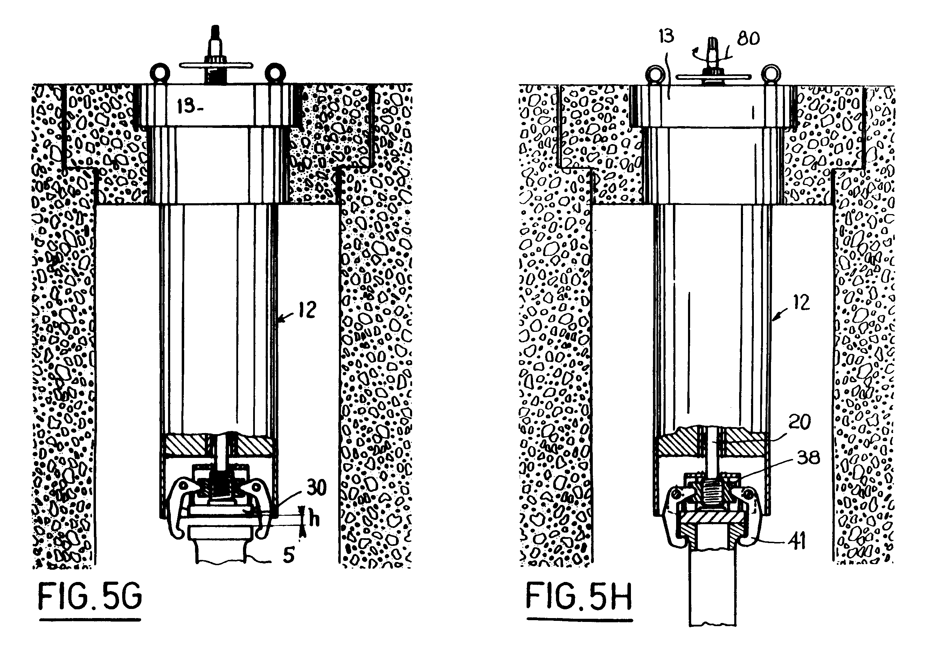

De cette manière, comme il est visible sur la figure 5G, à la fin du mouvement de descente de l'ensemble 12, le couvercle 30 est séparé par une certaine distance verticale h de la bride supérieure du corps de filtre 5. Cette distance de quelques millimètres correspond à la hauteur de soulèvement du couvercle par rotation de la tige de manoeuvre 20, dans la phase représentée sur la figure 5B. On assure alors la descente du couvercle jusqu'à son contact avec la bride supérieure du corps de filtre 5, en faisant tourner le manchon 25 dans le sens du vissage à l'intérieur du bouchon 13, en utilisant la poignée 26. La tige 20 et le couvercle 30 accompagnent le manchon 25 dans son déplacement vers le bas, jusqu'au moment où le couvercle 30 vient reposer sur la partie supérieure du corps 5.

Comme il est visible sur la figure 5H, on réalise alors le verrouillage du couvercle 30 en faisant tourner la tige 20 autour de son axe, dans le sens de la flèche 80, ce qui a pour effet de déplacer l'écrou 38 vers le haut et de faire pivoter les doigts de verrouillage 41 vers l'intérieur jusqu'à ce qu'ils viennent en position d'accrochage sous la bride supérieure du corps de filtre 5, comme représenté dans la partie de gauche de la figure 3.

Le dispositif est alors revenu dans sa position représentée sur la figure 5A qui correspond à la position de service du filtre.

Il est donc bien évident que le procédé de changement de la garniture du filtre qui vient d'être décrit utilisant le dispositif d'ouverture et de fermeture suivant l'invention est beaucoup plus simple et beaucoup plus rapide que le dispositif suivant l'art antérieur qui supposait la mise en place d'un module de manutention, l'utilisation d'outillages spécialisés ainsi que le dévissage et le vissage du couvercle à distance à l'intérieur de la casemate, cette opération nécessitant une visualisation de l'intérieur de la casemate et une présence d'opérateurs auprès des puits d'accès à la casemate traversant le module de manutention, ces opérateurs étant ainsi exposés à un rayonnement radio-actif.

De plus, le dispositif d'ouverture et de fermeture suivant l'invention est d'un fonctionnement très sûr et permet une fermeture efficace du couvercle du filtre quelle que soit la pression du fluide à l'intérieur du corps de filtre.

La mise en place du dispositif suivant l'invention dans l'ouverture de la casemate peut être réalisée avec un moyen de levage classique sans qu'il soit nécessaire de contrôler de manière précise la mise en place et le déplacement vertical du dispositif. En effet, l'accostage du couvercle du filtre est réalisé après la mise en place du dispositif de fermeture suivant l'invention, celui-ci reposant par l'intermédiaire du bouchon dans l'ouverture de la casemate.

L'invention ne se limite pas aux modes de réalisation qui ont été décrits.

C'est ainsi qu'on peut imaginer un dispositif d'ouverture et de fermeture comportant un bouchon et un corps cylindrique réalisés de manière quelconque sous forme monobloc ou en utilisant des pièces rapportées et soudées.

La tige de manoeuvre peut être montée de manière quelconque à l'intérieur de l'ouverture axiale du bouchon et du corps cylindrique et sa mise en appui sur le bouchon peut être réalisée de manière quelconque, par l'intermédiaire d'un dispositif de soulèvement à déplacement limité de type mécanique ou hydraulique.

Le dispositif de verrouillage du couvercle peut être d'un type quelconque à partir du moment où ce dispositif peut être commandé par le déplacement axial d'un écrou engagé sur une extrémité filetée de la tige de manoeuvre. Le verrouillage du couvercle peut être réalisé sur le corps de filtre lui-même ou sur une pièce rapportée sur ce corps de filtre.

L'invention est applicable à tout filtre d'une installation nucléaire disposé à l'intérieur d'une casemate de protection biologique.

## Revendications

1.- Dispositif d'ouverture et de fermeture d'un filtre (2) d'un circuit de fluide d'une installation nucléaire disposé à l'intérieur d'une casemate (1) de protection biologique ayant une ouverture d'accès (4) au filtre (2) dans sa partie supérieure, obturable par un bouchon (13) muni de moyens d'accrochage (48), le filtre (2) comportant un corps (5) ayant une ouverture à sa partie supérieure obturable par un couvercle (30) et située à l'aplomb de l'ouverture (4) de la casemate (1), caractérisé par le fait qu'il est constitué par un ensemble comportant :
- le bouchon d'obturation (13) de la casemate qui est prolongé par un corps cylindrique (14) dans sa direction axiale et percé d'une ouverture (18) traversant le bouchon (13) et le corps cylindrique (14) suivant leur axe et suivant toute leur longueur,
- une tige de manoeuvre (20) montée suivant l'axe de l'ouverture (18) traversant le bouchon (13) et le corps cylindrique (14), en appui sur le bouchon (13), montée rotative autour de son axe dans l'ouverture (18) et comportant une première extrémité saillante par rapport au bouchon (13) constituant une partie (22) d'entraînement en rotation autour de son axe et une seconde extrémité opposée saillante par rapport au corps cylindrique (14),
- un organe (25, 26) de déplacement axial de la tige de manoeuvre (20), dans un sens et dans l'autre, sur une longueur limitée,
- le couvercle (30) de fermeture du filtre relié à la seconde extrémité de la tige de manoeuvre (20),
- et un dispositif de verrouillage (36, 38, 41) du couvercle (30) sur le corps (5) du filtre (2) porté par le couvercle (30) et comportant un organe de manoeuvre (38) constitué par un écrou engagé sur une partie filetée (36) de la seconde extrémité de la tige de manoeuvre (20).

2.- Dispositif suivant la revendication 1, caractérisé par le fait que la tige de manoeuvre (20) repose sur un manchon fileté (25) engagé dans une partie taraudée de l'ouverture (18) à l'intérieur du bouchon (13), par l'intermédiaire d'une bague (27) fixée sur sa première partie saillante par rapport au bouchon (13), l'organe de déplacement axial de la tige étant constitué par le manchon fileté (25) muni d'un moyen d'actionnement manuel (26) pour sa mise en rotation dans le sens du vissage à l'intérieur du bouchon (13) ou dans le sens de son dévissage.

3.- Dispositif suivant l'une quelconque des revendications 1 et 2, caractérisé par le fait que la partie (22) d'entraînement en rotation de la tige de manoeuvre (20) et l'organe de déplacement axial (25, 26) de la tige de manoeuvre (20) sont disposés au-dessus du bouchon (13).

4.- Dispositif suivant l'une quelconque des revendications 1, 2 et 3, caractérisé par le fait que le dispositif de verrouillage du couvercle (30) est constitué par au moins deux doigts (41) montés pivotants autour d'axes (42) sur le couvercle (30) et en prise avec l'écrou (38) engagé sur la seconde extrémité (36) de la tige de manoeuvre (20), de façon à être déplacés en pivotement, lors des déplacements de l'écrou (38) dans la direction axiale de la tige de manoeuvre (20), par la mise en rotation de cette tige de manoeuvre (20) autour de son axe.

5.- Dispositif suivant la revendication 4, caractérisé par le fait que les doigts (41) comportent une extrémité d'accrochage (41a) venant en prise dans sa position de verrouillage avec une bride disposée à la partie supérieure du corps de filtre (5).

6.- Dispositif suivant la revendication 4, caractérisé par le fait que chacun des doigts de verrouillage (58) du couvercle (56) comporte une partie d'accrochage (58a) venant se placer, dans la position de verrouillage du doigt (58), dans une cavité (57) d'une couronne d'ancrage (53) solidaire de la partie supérieure du corps de filtre (50), le couvercle (56) dans sa position de fermeture étant placé au moins partiellement à l'intérieur de l'alésage interne de la couronne d'ancrage (53).

7.- Dispositif suivant l'une quelconque des revendications 1 à 6, caractérisé par le fait que le dispositif de verrouillage du couvercle (30) comporte un ensemble de support (31) solidaire de la surface extérieure du couvercle (30) auquel la seconde extrémité (36) de la tige de manoeuvre (20) est reliée par l'intermédiaire de butées à bille (34, 35), de façon à assurer la suspension du couvercle (30) à la tige de manoeuvre (20), la tige de manoeuvre (20) étant montée rotative autour de son axe par rapport au couvercle, par l'intermédiaire des butées à bille (34, 35).

8.- Dispositif suivant la revendication 7, caractérisé par le fait que l'écrou (38) est bloqué en rotation et guidé en translation dans la direction de l'axe de la tige de manoeuvre (20) par l'ensemble de support (31).

9.- Dispositif suivant la revendication 8, caractérisé par le fait que l'ensemble de support (31) porte des chandelles (37) parallèles à l'axe du bouchon (13) et de la tige (20) et que le corps cylindrique (14) du bouchon (13) comporte des alésages dans lesquels les chandelles (37) sont engagées de manière coulissante pour réaliser le blocage en rotation de l'ensemble (31).

10.- Dispositif suivant l'une quelconque des revendications 1 à 9, caractérisé par le fait que le bouchon (13) présente des éléments de repérage (17) et la casemate (1) des éléments correspondants (23) pour réaliser une orientation correcte du bouchon (13) lors de sa mise en place dans l'ouverture (4).

11.- Procédé de remplacement de la garniture d'un filtre (2) d'un circuit de fluide d'une installation nucléaire disposé à l'intérieur d'une casemate (1) de protection biologique ayant une ouverture (4) d'accès au filtre (2) dans sa partie supérieure obturable par un bouchon (13) muni de moyens de levage (48), le filtre (2) comportant un corps (5) ayant une ouverture à sa partie supérieure obturable par un couvercle (30) et située à l'aplomb de l'ouverture de la casemate (1), ce procédé consistant à ouvrir la partie supérieure du filtre, à prélever une garniture usagée disposée dans le filtre, à remplacer cette garniture usagée par une garniture neuve et à refermer l'ouverture supérieure du filtre, caractérisé par le fait qu'on réalise successivement, depuis l'extérieur de la casemate :

- un déverrouillage du couvercle (30) du filtre (2),
- un soulèvement limité du couvercle (30) au-dessus du corps de filtre (5),
- un levage et une extraction simultanés du bouchon (13) de la casemate (1) et du couvercle (30) du filtre (2),
- une remise en place simultanée du bouchon (13) dans l'ouverture (4) de la casemate (1) et du couvercle (30) à une distance verticale faible au-dessus du corps de filtre (5),
- un accostage du couvercle (30) sur la partie supérieure du corps de filtre (5),
- et un verrouillage du couvercle (30) sur la partie supérieure du corps de filtre (5).

**Patentansprüche**

1. Vorrichtung zum Öffnen und Schließen eines Filters (2) eines Flüssigkeitskreislaufs einer Kernanlage innerhalb eines biologisch abgeschirmten Schutzraums (1) mit einer Zugangstür (4) zum Filter (2), der in seinem oberen Bereich mit einem Stopfen (13) verschließbar ist, der über Haltevorrichtungen (48) verfügt, wobei der Filter (2) einen Körper (5) aufweist, der an seinem oberen Teil eine Öffnung hat, die mit einem Deckel (30) verschließbar ist und lotrecht zur Öffnung (4) des Schutzraums (1) sitzt, dadurch gekennzeichnet, daß sie folgende, zusammengehörige Teile aufweist:

- den Verschlußstopfen (13) für den abgeschirmten Schutzraum, der in axialer Richtung durch einen Zylinderkörper (14) verlängert ist und eine Öffnung (18) aufweist, die durch den Stopfen (13) und den Zylinderkörper (14) entlang ihrer Achse und auf ihrer ganzen Länge hindurchführt,
- eine Bedienungsstange (20), die entlang der Achse der Öffnung (18) montiert wird und durch den Stopfen (13) und den Zylinderkörper (14) hindurchgeführt wird und auf dem Stopfen (13) aufliegt, die drehend um ihre Achse in die Öffnung (18) montiert ist und ein erstes Endstück aufweist, das gegenüber dem Stopfen (13) heraussteht und ein Antriebsstück (22) für die Drehung um die eigene Achse bildet, sowie ein zweites Endstück am anderen Ende aufweist, das gegenüber dem zylindrischen Körper (14) heraussteht,
- eine Vorrichtung (25,26) zur axialen Verschiebung der Bedienungsstange (20) in die eine und die andere Richtung über eine begrenzte Länge,
- den Deckel (30) zum Verschluß des Filters, der mit dem zweiten Endstück der Bedienungsstange (20) verbunden ist,
- sowie eine Verriegelungsvorrichtung (36,38,41) für den Deckel (30) am Körper (5) des Filters (2), die vom Deckel (30) getragen wird und ein Bedienungselement (38) aufweist, das aus einer auf einen gewindeten Teil (36) des zweiten Endstücks der Bedienungsstange (20) geschraubten Mutter besteht.

2. Vorrichtung gemäß Anspruch 1, dadurch gekennzeichnet, daß die Bedienungsstange (20) auf einem gewindeten Stutzen (25) aufliegt, der in einen gewindeten Teil der Öffnung (18) im Stopfen (13) geführt ist, und zwar mit Hilfe eines Rings (27), der an ihrem ersten, gegenüber dem Stopfen (13) herausstehenden Teil befestigt ist, wobei die Vorrichtung zur axialen Verschiebung der Stange aus dem gewindeten Stutzen (25) besteht, der über eine von Hand zu betätigende Bedienungsvorrichtung (26) verfügt, mit der sie innerhalb des Stopfens (13) in Zu- oder Aufschraubrichtung in Drehung versetzt werden kann.

3. Vorrichtung gemäß einem der Ansprüche 1 und 2, dadurch gekennzeichnet, daß das Antriebsstück (22) für die Drehung der Bedienungsstange (20) und die Vorrichtung zu ihrer Axialverschiebung (25,26) oberhalb des Stopfens (13) angeordnet sind.

4. Vorrichtung gemäß einem der Ansprüche 1, 2 und 3, dadurch gekennzeichnet, daß die Verriegelungsvorrichtung für den Deckel (30) aus mindestens zwei Klammern (41) besteht, die schwenkbar um Bolzen (42) am Deckel (30) montiert sind und im Eingriff der Mutter (38) stehen, die auf dem zweiten Ende (36) der Bedienungsstange (20) sitzt, so daß sie bei Bewegungen der Mutter (38) in Axialrichtung der Bedienungsstange (20) dadurch, daß die Bedienungsstange (20) in Drehung um ihre Achse versetzt wird, geschwenkt werden kann.

5. Vorrichtung gemäß Anspruch 4, dadurch gekennzeichnet, daß die Klammern (41) ein Befestigungsende (41a) aufweisen, das in seiner Verriegelungsposition in einen Flansch faßt, der am oberen Teil des Filterkörpers (5) sitzt.

6. Vorrichtung gemäß Anspruch 4, dadurch gekennzeichnet, daß jede Verriegelungsklammer (58) des Deckels (56) ein Befestigungsteil (58a) aufweist, das in Verriegelungsstellung der Klammer (58) in den Hohlraum (57) einer Verankerungskrone (53) faßt, die fest am oberen Teil des Filterkörpers (50) sitzt, wobei der Deckel (56) in seiner Verschlußposition mindestens zum Teil in der Innenbohrung der Verankerungskrone (53) plaziert ist.

7. Vorrichtung gemäß einem der Ansprüche 1 bis 6, dadurch gekennzeichnet, daß die Verriegelungsvorrichtung des Deckels (30) eine Haltevorrichtung (31) aufweist, die aus einem Stück ist mit der Außenfläche des Deckels (30), mit dem das zweite Endstück (36) der Bedienungsstange (20) über Axialkugellager (34,35) verbunden ist, so daß die Aufhängung des Deckels (30) an der Bedienungsstange (20) gewährleistet ist, wobei die Bedienungsstange (20) gegenüber dem Deckel drehend um ihre Achse montiert ist, und zwar mit Hilfe der Axialkugellager (34,35).

8. Vorrichtung gemäß Anspruch 7, dadurch gekennzeichnet, daß die Mutter (38) drehend arretiert und in ihrer Bewegung in Achsrichtung der Bedienungsstange (20) von der Haltevorrichtung (31) geführt wird.

9. Vorrichtung gemäß Anspruch 8, dadurch gekennzeichnet, daß die Haltevorrichtung (31) über parallel zur Achse des Stopfens (13) und der Stange (20) verlaufende Abstandsstangen (37) verfügt, und daß der Zylinderkörper (14) des Stopfens (13) Bohrungen aufweist, in die diese Stangen (37) geschoben werden, um die Drehung des Ganzen (31) zu blockieren.

10. Vorrichtung gemäß einem der Ansprüche 1 bis 9, dadurch gekennzeichnet, daß der Stopfen (13) Markierungen (17) und der Schutzraum (1) die entsprechenden Elemente (23) aufweist, die die korrekte Ausrichtung des Stopfens (13) bei seinem Einsetzen in die Öffnung (4) gewährleisten.

11. Verfahren zum Auswechseln der Garnitur eines Filters (2) eines Flüssigkeitskreislaufs einer Kernanlage innerhalb eines biologisch abgeschirmten Schutzraums (1) mit einer Zugangsöffnung (4) zum Filter (2) in seinem oberen, mit einem über Befestigungsvorrichtungen (48) verfügenden Stopfen (13) verschließbaren Bereich, wobei der Filter (2) einen Körper (5) aufweist, der an seinem oberen Ende eine Öffnung hat, die mit einem Deckel (30) verschließbar ist und senkrecht zur Öffnung des Schutzraums (1) liegt, wobei dieses Verfahren darin besteht, den oberen Bereich des Filters zu öffnen, eine verbrauchte, im Filter befindliche Garnitur zu entnehmen, die verbrauchte Garnitur durch eine neue Garnitur zu ersetzen und die obere Öffnung des Filters wieder zu verschließen, dadurch gekennzeichnet, daß nacheinander von außerhalb des Schutzraums in folgenden Schritten vorgegangen wird:

- der Deckel (30) des Filters (2) wird entriegelt,
- der Deckel (30) wird um ein begrenztes Maß über den Filterkörper (5) angehoben,
- der Stopfen (13) des Schutzraums (1) und der Deckel (30) des Filters (2) werden gleichzeitig hochgehoben und herausgenommen,
- gleichzeitig wird der Stopfen (13) wieder in die Öffnung (4) des Schutzraums (1) gesetzt und der Deckel (30) in geringem vertikalen Abstand über dem Filterkörper (5) wieder eingesetzt,
- der Deckel (30) wird am oberen Teil des Filterkörpers (5) angekoppelt,
- und der Deckel (30) wird mit dem oberen Teil des Filterkörpers (5) verriegelt.

## Claims

1. Apparatus for opening and closing a filter (2) in a fluid circuit of a nuclear installation, arranged inside a biological protection casing (1) having an opening (4) for access to the filter (2) in its upper part, sealable by means of a plug (13) fitted with attachment means (48), the filter (2) having a body (5) which has an opening at the top adapted to be sealed off by a cover (30), said opening being located in line with the perpendicular of the opening in the casing (1), characterised in that it consists of an assembly which comprises:

- the sealing plug (13) of the casing which is extended by a cylindrical body (14) in its axial direction and drilled with an opening (18) passing through the plug (13) and the cylindrical body (14) along the axis thereof and along their entire length,
- an operating rod (20) mounted along the axis of the opening (18) which passes through the plug (13) and the cylindrical body (14), abutting on the plug (13), said rod being mounted so as to rotate about its axis in the opening (18) and comprising a first end which projects relative to the plug (13) constituting a part (22) which is rotatably driven about its axis and a second opposite end which projects relative to the cylindrical body (14),
- means (25,26) for axially displacing the operating rod (20), in two directions, over a limited length,
- the cover (30) closing off the filter being connected to the second end of the operating rod (20),
- and means (36,38,41) for locking the cover (30) on the body (5) of the filter (2) carried by the cover (30) and comprising an operating member (38) consisting of a nut engaging on a threaded portion (36) of the second end of the operating rod (20).

2. Apparatus according to claim 1, characterised in that the operating rod (20) rests on a threaded sleeve (25) engaging in a threaded portion of the opening (18) inside the plug (13), via a ring (27) fixed to the first part thereof which projects relative to the plug (13), the means for axially moving the rod consisting of the threaded sleeve (25) equipped with manual actuating means (26) for rotating it in the direction of tightening inside the plug (13) or in the direction of unscrewing.

3. Apparatus according to either of claims 1 and 2, characterised in that the part (20) for rotatably driving the operating rod (20) and the means (25,26) for axially displacing the operating rod (20) are arranged above the plug (13).

4. Apparatus according to any of claims 1, 2 and 3, characterised in that the means for locking the cover (30) consists of at least two fingers (41) pivotally mounted about spindles (42) on the cover (30) and locking with the nut (38) engaging on the second end (36) of the operating rod (20), so as to be pivotally displaced, during the movements of the nut (38) in the axial direction of the operating rod (20), by the rotation of this operating rod (20) about its axis.

5. Apparatus according to claim 4, characterised in that the fingers (41) have an attachment end (41a) which engages in its locking position with a flange arranged on the upper part of the filter body (5).

6. Apparatus according to claim 4, characterised in that each of the locking fingers (58) of the cover (56) has an attachment portion (58a) which is fitted, in the locking position of the finger (58), in a cavity (57) in an anchoring crown (53) which is integral with the upper part of the filter body (50), the cover (56) in its closed position being located at least partly inside the internal wall in the anchoring crown (53).

7. Apparatus according to any of claims 1 to 6, characterised in that the locking means for the cover (30) comprises a support assembly (31) integral with the outer surface of the cover (30) to which the second end (36) of the operating rod (20) is connected via ball bearing supports (34,35), so that the cover (30) is suspended from the operating rod (20), the operating rod (20) being rotatably mounted about its axis relative to the cover by means of ball bearing supports (34,35).

8. Apparatus according to claim 7, characterised in that the nut (38) is prevented from rotating and is guided in translation in the direction of the axis of the operating rod (20) by the support assembly (31).

9. Apparatus according to claim 8, characterised in that the support assembly (31) has uprights (37) parallel to the axis of the plug (13) and rod (20) and the cylindrical body (14) of the plug (13) has bores in which the uprights (37) slidably engage in order to achieve rotational blocking of the assembly (31).

10. Apparatus according to any one of claims 1 to 9, characterised in that the plug (13) has locating elements (17) and the casing (1) has corresponding elements (23) for achieving correct alignment of the plug (13) when it is placed in the opening (4).

11. Process for replacing the lining of a filter (2) of a fluid circuit of a nuclear installation arranged inside a biological protection casing (1) having an opening (4) to give access to the filter (2) in the upper part which is adapted to be closed off by a plug (13) equipped with lifting means (48), the filter (2) comprising a body (5) which has an opening at its upper part adapted to be sealed off by a cover (30) and arranged in alignment with the opening in the casing (1), the process consisting in opening the upper part of the filter, removing a worn out lining arranged in the filter, replacing this worn out lining with a new lining and resealing the upper opening in the filter, characterised in that the following steps are carried out successively, from outside the casing:

    - unlocking the cover (30) of the filter (2),

    - lifting the cover (30) to a limited extent above the body of the filter (5),

    - simultaneous lifting and removal of the plug (13) from the casing (1) and the cover (30) of the filter (2),

    - simultaneously replacing the plug (13) in the opening (4) in the casing (1) and the cover (30) at a slight vertical distance above the filter body (5),

    - bringing the cover (30) into position on the upper part of the filter body (5),

    - and locking the cover (30) on the upper part of the filter body (5).

FIG.1

FIG. 2

FIG.3A

FIG.3B

EP 0 348 250 B1

FIG. 4A

FIG. 4B

FIG.5B

FIG.5A

FIG.5C

FIG.5D

FIG. 5E

FIG.5F

EP 0 348 250 B1

FIG.5H

FIG.5G